# EUROPÄISCHE PATENTSCHRIFT

(11) **EP 3 312 956 B1**
(45) Veröffentlichungstag und Bekanntmachung des Hinweises auf die Patenterteilung: **16.12.2020**
(21) Anmeldenummer: 16194464.0
(22) Anmeldetag: 18.10.2016
(51) Int. Cl.: H02G 1/12

(54) **VERFAHREN UND VORRICHTUNG ZUM ABISOLIEREN EINES KABELS MIT EINER MEHRSCHICHTIGEN UMMANTELUNG**
METHOD AND DEVICE FOR INSULATING A CABLE WITH A MULTI-LAYER SHEATH
PROCÉDÉ ET DISPOSITIF POUR DÉNUDER UN CÂBLE COMPRENANT UNE GAINE MULTICOUCHES

(43) Veröffentlichungstag der Anmeldung: 25.04.2018
(73) Patentinhaber: Komax Holding AG, 6036 Dierikon (CH)
(72) Erfinder: KISER, Markus, 6382 Büren (CH); STOCKER, Martin, 6403 Küssnacht (CH)
(74) Vertreter: Inventio AG

(56) Entgegenhaltungen:
- EP-A1- 2 887 475
- CN-A- 104 113 016
- US-A- 5 142 121
- US-A1- 2004 182 837
- US-A1- 2010 126 665

## Beschreibung

Die Erfindung betrifft ein Verfahren und eine Vorrichtung zum Abisolieren eines Kabels mit einer mehrschichtigen Ummantelung.

Einfache elektrische Kabel umfassen wenigstens einen Leiter, beispielsweise einen Draht oder eine oder mehrere Litzen sowie eine isolierende Umhüllung beispielsweise aus PVC. Derartige Kabel werden üblicherweise in mechanisch arbeitenden, Abisoliermesser umfassenden Abisoliereinrichtungen abisoliert.

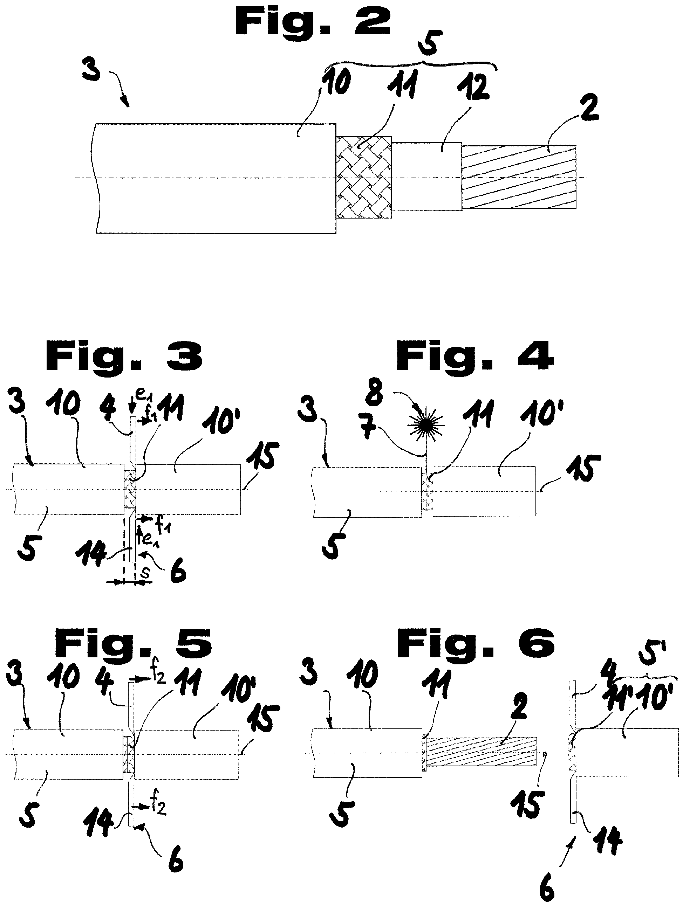

Für bestimmte Anwendungen werden komplexere Kabel eingesetzt, deren Ummantelung mehrschichtig aufgebaut ist. Ein derartiges Kabel mit einer mehrschichtigen Ummantelung ist beispielhaft in Fig. 2 dargestellt. Das Kabel 3 weist innen einen elektrischen Leiter 2 bestehend aus mehreren Litzen auf. Die Litzen sind von einer Folie 12 beispielweise aus Kunststoff umhüllt. Die Folie 12 kann zum Schaffen eines Signalkabels als Schirmfolie ausgestaltet sein. Solche Schirmfolien können durch mit Kupfer, Aluminium oder anderen Metallen beschichtete Kunststofffolien gebildet werden. Die Dicke gängiger Schirmfolien beträgt ca. 0.03 mm. Eine weitere Schicht 11 besteht beispielhaft aus einem Glasfasergewebe. Zum Schutz des Kabels 3 ist ein Aussenmantel 10 aus PVC oder einem anderen elektrisch isolierenden elastischen Grundstoff vorgesehen. In der Praxis hat sich gezeigt, dass Kabel mit mehrschichtigen Ummantelungen schwierig mit mechanischen Verfahren abisolierbar sind. Ein sauberes Durchtrennen des Glasfasergewebes ist mit Abisoliermessern kaum möglich. Probleme bereitet insbesondere die Folie 12, da beim Abtrennen mittels Abisoliermessern unerwünschte Verletzungen der Litzen passieren können.

Aus der US 2015/162729 ist ein Verfahren zum Abisolieren eines mehrschichtigen Kabels bekannt geworden, bei dem das Kabel mit einem Laser abisoliert wird. Ein Laserstrahl rotiert dabei um ein stillstehendes Kabel, um einen Trennschnitt der Ummantelung vorzunehmen. Es ist jedoch schwierig, den Laser so einzustellen, dass er alle Schichten der Ummantelung mit einem Schnitt vollständig und sauber durchtrennt. Alternativ könnte ein unvollständiger Laserschnitt ausgeführt und danach die so angeschnittene Ummantelung abgezogen werden. Es bleiben aber in diesem Fall auf den Litzen unzulässige Verunreinigungen zurück, welche in einem nächsten Bearbeitungsschritt, beispielsweise mit Bürsten, aufwändig entfernt werden müssen.

CN 104113016 A zeigt eine Kabel-Schälmaschine mit einer Wärmekammer, einer Laser-Schneideinheit und einer Schäleinheit, US 2010/0126665 A1 zeigt eine Laser-basiertes Verfahren zum Abmanteln von Glasfaserkabeln. US 2004/182837 A1 betrifft ein Verfahren zum Abisolieren von Flachkabeln.

US 5 142 121 A betrifft ein Verfahren zum Abisolieren von Kabeln. EP 2 887 475 A1 betrifft ein Verfahren sowie eine Vorrichtung zum Durchtrennen einer Abschirmung eines Koaxialkabels. Es ist eine Aufgabe der vorliegenden Erfindung, die Nachteile des Bekannten zu vermeiden und die bekannten Verfahren zum Abisolieren von Kabeln mit mehrschichtigen Ummantelungen zu optimieren und zu verbessern.

Erfindungsgemäss wird diese Aufgabe mit einem Verfahren mit den Merkmalen des Anspruchs 1 gelöst.

Das abzuisolierende Kabel kann einen Leiter (beispielsweise einen Draht oder eine oder mehrere Litzen aus Kupfer oder einem anderen elektrisch leitenden Metall) und eine mehrschichtige Ummantelung umfassen. Das Kabel könnte jedoch auch ein mehradriges Kabel sein, wobei die Kabeladern von einer mehrschichtigen Ummantelung umgeben sind. Das nachfolgend beschriebene Verfahren ist insbesondere für Rundkabel geeignet. Ein mehradriges Rundkabel ist zum Beispiel ein im Querschnitt rundes Kabel, das eine einen Kreisring bildenden Ummantelung und kreisförmig angeordnete, vertwistete Kabeladern umfasst.

Das erfindungsgemässe Verfahren zum Abisolieren eines Kabels mit einer mehrschichtigen Ummantelung ist dadurch gekennzeichnet, dass wenigstens eine Schicht der Ummantelung des Kabels wenigstens bereichsweise mechanisch ab- oder durchgetrennt und wenigstens eine andere Schicht der Ummantelung des Kabels wenigstens bereichsweise in einem thermischen Trennverfahren ab- oder durchgetrennt wird. Zum mechanischen Ab- oder Durchtrennen einer Schicht können bevorzugt Schneidverfahren unter Verwendung von Messern oder Schneiden eingesetzt werden. Wenn für das mechanische Trennen zum Beispiel Abisoliermesser, die nur für den Schnitt translatorisch in radialer Richtung gegen das Kabel bewegt werden, verwendet werden, ist es in der Regel kaum möglich, die jeweilige Schicht der Ummantelung vollständig für das Absiolieren zu durchtrennen. Die üblicherweise verwendeten Abisoliermesser weisen zwar an das Kabel angepasste Schneidgeometrien auf (z.B. V-Messer, Formmesser), jedoch bleibt nach dem Trennvorgang praktisch immer ein nicht abgetrennter Bereich der Schicht übrig, der schliesslich erst beim Abziehvorgang durch Reissen abgetrennt wird. Ein idealer, gleichmässig über den Umfang verteilter Trennschnitt ist hier kaum möglich. Dahingegen könnten mittels einem oder mehreren um das Kabel rotierenden Abisoliermessern die jeweilige Schicht über den ganzen Umfang, also nicht nur bereichsweise, getrennt werden. Das vorerwähnte thermische Trennen kann zum Beispiel durch Laserschneiden erfolgen. Ein auf das Kabel gerichteter Laserstrahl kann bezüglich der Kabelachse um das Kabel bewegt werden, wobei nach einer Rotation von weniger als 360° um das Kabel nur eine bereichsweise Durchtrennung der jeweiligen Schicht oder Schichten vorliegen würde.

Das Verfahren könnte folgende Schritte umfassen: Anschneiden einer ersten Schicht der Ummantelung des Kabels durch einen Laserstrahl einer Laser-Schneideinrichtung; Anschneiden einer gegenüber der ersten Schicht innen liegenden Schicht der Ummantelung in einer Abisoliereinrichtung mit wenigstens einem Abisoliermesser; und Abziehen der mittels Abisoliermesser und Laserstrahl angeschnittenen Ummantelung.

Das erfindungsgemässe Abisolationsverfahren zeichnet sich durch die nachfolgend erläuterten Verfahrensschritte aus:
In einem Schritt a) wird die erste Schicht der Ummantelung des Kabels in einer Abisoliereinrichtung mit wenigstens einem Abisoliermesser angeschnitten. Im Schritt a) wird die Ummantelung nicht vollständig, sondern nur teilweise eingeschnitten. Bei der erwähnten ersten Schicht handelt es sich in der Regel um die äusserste Schicht der Ummantelung, beispielsweise ein Aussenmantel aus PVC oder einem anderen Kunststoffmaterial zur Isolation und zum Schutz des Kabels vor Witterungseinflüssen. Für das Anschneiden kann das wenigstens eine Abisoliermesser translatorisch gegen das Kabel bewegt werden. Bevorzugt ist die Bewegungsrichtung für den Schneidevorgang radial gegen das Kabel. Nach dem Anschneidevorgang kann das wenigstens eine Abisoliermesser wieder zurück in eine Ausgangsstellung gefahren werden. Das Anschneiden erfolgt vorzugsweise bis zum Erreichen einer zweiten Schicht der Ummantelung; die Schnitttiefe eines jeweiligen Abisoliermessers entspricht demnach in etwa der Dicke der erwähnten ersten Schicht. Die erwähnte zweite Schicht muss aber nicht zwingend eine unmittelbar auf die die äusserste Schicht der Ummantelung (wie etwa der schon erwähnte Aussenmantel) folgende Schicht sein. Mit dem wenigstens einen Abisoliermesser könnten im Schritt a) auch mehrere Schichten gemeinsam oder sequenziell angeschnitten werden.

In einem Schritt b) wird eine gegenüber der ersten Schicht innen liegende Schicht der Ummantelung durch einen Laserstrahl einer Laser-Schneideinrichtung angeschnitten. Die mit dem Laserstrahl anzuschneidende Schicht kann zum Beispiel eine Gewebeschicht (wie etwa die Gewebeschicht 11 gemäss Fig. 2) sein. Diese gegenüber der ersten Schicht innen liegende Schicht wird nachfolgend der Einfachheit halber als "zweite Schicht" bezeichnet. Wenn mit dem wenigstens einen Abisoliermesser im Schritt a) mehrere Schichten gemeinsam oder sequenziell angeschnitten werden, wäre die "zweite Schicht" dann die auf die genannten mehreren "ersten Schichten" folgende Schicht.

Für das Anschneiden der zweiten Schicht kann der in radialer Richtung auf das Kabel gerichtete Laserstrahl bei festgehaltenem Kabel um das Kabel herumgeführt werden. Anstelle der Rotationsbewegung des Lasers ist es aber auch vorstellbar, eine den Laserstrahl generierende Laserquelle festzuhalten und das Kabel um seine Kabelachse zu rotieren.

In einem Schritt c) wird schliesslich die mittels Abisoliermesser und Laserstrahl angeschnittene Ummantelung abgezogen, wodurch der Abisolierprozess beendet wird. Das Abziehen gemäss Schritt c) kann unter Verwendung der vorgenannten Abisoliereinrichtung durch Verschieben des wenigstens einen Abisoliermessers in Relation zum Kabel in Längsrichtung erfolgen. Diese Relativbewegung zum Abziehen der Ummantelung umfasst beispielsweise ein Verschieben des Abisoliermessers oder der Abisoliermesser bei festgehaltenem Kabel oder ein Verschieben des Kabels bei festgehaltenem Abisoliermesser oder festgehaltenen Abisoliermessern. Es wären allenfalls sogar auch Mischformen der vorerwähnten Bewegungsmuster denkbar.

Nach dem Abziehen der Ummantelung liegt der Leiter frei oder - im Falle eines mehradrigen Kabels - liegen die Kabeladern frei und können weiterbearbeitet werden. Beispielsweise könnten die abisolierten Kabelenden mit den freiliegenden Leitern gecrimpt werden. Dank des zweistufigen oder gegebenenfalls auch mehrstufigen Abisolierverfahrens, bei dem mechanische Abisolierverfahren und Laser-Absiolierverfahren auf vorteilhafte Weise kombiniert werden, lassen sich mehrschichtige Kabel einfach und effizient in guter Qualität abisolieren. Auf diese Weise werden gute Abisolierergebnisse erreicht; aufwendige Nachbearbeitungen der Kabelenden, die beispielsweise bei unvollständigen Schnitten entstehen können, sind nicht notwendig.

Wenn die Ummantelung des Kabels mehr als zwei Schichten aufweist, kann es vorteilhaft sein, wenn vor dem Abziehen der Ummantelung gemäss Schritt c) wenigstens einer der Schritte a) und b) wiederholt wird. Beispielsweise kann nach dem Anschneiden mittels dem wenigstens einem Abisoliermesser der ersten Schicht und nach dem Anschneiden der zweiten Schicht mittels Laserstrahl eine dritte Schicht mittels Abisoliermesser angeschnitten werden. Alternativ könnte die dritte Schicht auch durch den Laserstrahl der Laser-Schneideinrichtung angeschnitten werden.

Die dritte Schicht kann zum Beispiel eine Folienschicht sein. Diese Folie kann eine Dicke aufweisen, die kleiner aus 1 mm ist. Wenn das Kabel als Signalkabel eingesetzt werden soll, dann muss das Kabel elektromagnetisch gut geschirmt sein, um eine hohe Datenübertragungsqualität sicherzustellen und damit von den Kabeln abgestrahlte elektromagnetische Wellen beispielsweise in der Bordelektronik von Fahrzeugen keine unerwünschten Störungen verursachen können. Zur Abschirmung des Kabels können Schirmfolien eingesetzt werden. Eine derartige Schirmfolie besteht häufig aus einer Kunststofffolie, beispielsweise aus PET, auf welche eine Aluminiumschicht aufgebracht wurde. Die Dicke gängiger Schinnfolien beträgt ca. 0.3 mm. Bekannt sind aber auch Schinnfolien, die vollständig aus einem Metall wie etwa Kupfer oder Aluminium bestehen. Diese Schirmfolien sind auch als Ganzmetallfolien bekannt.

Erfindungsgemäss wird nach dem Schritt a) die angeschnittene erste Schicht vorzugsweise mittels des wenigstens einen Abisoliermessers derart in Bezug auf das Kabel in Längsrichtung verschoben, dass zum Freilegen der durch den Laserstrahl anzuschneidenden zweiten Schicht ein Spalt entsteht. Dies stellt sicher, dass der Laserschnitt präzise und genau durchgeführt werden kann.

Zwischen den vorerwähnten Schritten a) und b) kann das Kabel bzw. das abzuisolierende Kabelende des Kabels mittels einer Transfereinrichtung von der Abisoliereinrichtung zur Laser-Schneideinrichtung transferiert werden. Der Kabeltransfer kann zum Beispiel durch Verschieben, Verschwenken und/oder durch eine Längsbewegung des Kabels erfolgen.

Besonders bevorzugt kann nach Beendigung des Schrittes b) das Kabel mittels der Transfereinrichtung zurück zur Abisoliereinrichtung gebracht werden. Durch Verschieben in Längsrichtung des wenigstens einen Abisoliermessers der Abisoliereinrichtung kann die vollständig oder erst schichtabschnittsweise angeschnittene Ummantelung vollständig oder teilweise abgezogen werden. Durch das teilweise Abziehen der angeschnittenen Ummantelung entsteht ein Spalt, in den der Laserstrahl der Laser-Schneideinrichtung für ein Anschneiden einer weiteren Schicht eingebracht werden kann.

Ein weiterer Aspekt der Erfindung betrifft eine Vorrichtung zum Abisolieren eines Kabels mit einer mehrschichtigen Ummantelung insbesondere zum Durchführen des vorgängig beschriebenen Verfahrens. Die erfindungsgemässe Vorrichtung umfasst eine Abisoliereinrichtung mit wenigstens einem Abisoliermesser sowie eine Laser-Schneideinrichtung. Bei der erwähnten Abisoliereinrichtung mit dem wenigstens einen Abisoliermesser handelt es sich um eine mechanisch arbeitende Abisoliereinrichtung, die nachfolgend der Einfachheit halber als "Abisoliereinrichtung" bezeichnet wird. Einzelne oder mehrere der Schichten der Ummantelung können dabei wahlweise in der Abisoliereinrichtung oder in der Laser-Schneideinrichtung angeschnitten werden können.

Die Abisoliereinrichtung und die Laser-Schneideinrichtung können örtlich voneinander getrennt sein. Diese örtliche Trennung kann beispielsweise dadurch erreicht werden, indem die Abisoliereinrichtung und die Laser-Schneideinrichtung separaten, nicht miteinander verbundenen Kabelbearbeitungsmaschinen zugeordnet sind oder indem die Abisoliereinrichtung und die Laser-Schneideinrichtung zwar einer gemeinsamen Kabelbearbeitungsvorrichtung (z.B. durch Anordnung auf einem gemeinsamen Maschinentisch) zugeordnet sind, jedoch die Abisoliereinrichtung und die Laser-Schneideinrichtung nebeneinander stehend oder anderweitig voneinander entfernt angeordnet sind.

Insbesondere für letztgenannten Fall kann es vorteilhaft sein, wenn die Vorrichtung eine Transfereinrichtung aufweist, mit der das Kabel zwischen der Abisoliereinrichtung und der Laser-Schneideinrichtung transferierbar ist. Es wäre allerdings auch denkbar, eine spezielle Abisolierstation mit Abisoliereinrichtung und Laser-Schneideinrichtung vorzusehen, so dass das Kabel zwischen den einzelnen Abisolierschritten nicht bewegt werden muss.

Als Transfereinrichtung kann zum Beispiel eine Schwenkeinheit mit einem Greifer zum Greifen des Kabels eingesetzt werden. Auch Longitudinalförderer wie etwa Band- oder Rollenförderer kommen als Transfereinrichtungen in Frage.

Für ein Kabel, das einen Aussenmantel als erste Schicht, eine darunterliegende Gewebeschicht als zweite Schicht und gegebenenfalls eine Gewebeschicht oder eine andere Verstärkungsschicht als dritte Schicht umfasst, wird der Aussenmantel in der Abisoliereinrichtung mit dem wenigstens einen Abisoliermesser und später die Gewebeschicht durch den Laserstrahl der Laser-Schneideinrichtung angeschnitten. Je nach Schichtaufbau der Ummantelung des Kabels könnte es auch erforderlich sein, die erste Schicht der Ummantelung zunächst mittels Laserstrahl anzuschneiden und erst dann die mechanische Abisoliereinrichtung mit dem wenigstens einen Abisoliermesser zum Anschneiden der zweiten Schicht der Ummantelung einzusetzen. Es wäre mit der erfindungsgemässen Vorrichtung demnach möglich, das eingangs beschriebene erfindungsgemässe Verfahren betreffend die Schritte a) und b) in umgekehrter Reihenfolge vorzunehmen.

Die Vorrichtung kann eine Steuereinrichtung aufweisen, die derart ausgestaltet und die derart mit der Abisoliereinrichtung und der Laser-Schneideinrichtung verbunden ist, dass mit der Steuereinrichtung sowohl der Schneidvorgang zum Anschneiden wenigstens einer Schicht der Ummantelung des Kabels unter Verwendung der Abisoliereinrichtung als auch der Schneidvorgang zum Anschneiden wenigstens einer anderen oder weiteren Schicht der Ummantelung des Kabels unter Verwendung der Laser-Schneideinrichtung ansteuerbar ist. Diese Anordnung bewirkt eine weitere Effizienzsteigerung. Das Abisolieren des Kabels mit der mehrschichtigen Ummantelung kann mit Hilfe der Steuereinrichtung einfach automatisiert werden.

Vorzugsweise kann die Steuereinrichtung mit der Transfereinrichtung verbunden sein, wobei die Steuereinrichtung dazu ausgebildet ist, das Kabel nach Beendigung eines Anschneidevorgangs in der Abisoliereinrichtung oder in der Laser-Schneideinrichtung automatisch von der Abisoliereinrichtung zur Laser-Schneideinrichtung bzw. von der Laser-Schneideinrichtung zur Abisoliereinrichtung zuzuführen.

Weitere Einzelmerkmale und Vorteile der Erfindung ergeben sich aus der nachfolgenden Beschreibung von Ausführungsbeispielen und aus den Zeichnungen. Es zeigen:
- Fig. 1: eine Draufsicht auf eine erfindungsgemässe Vorrichtung zum Abisolieren eines Kabels mit einer mehrschichtigen Ummantelung,
- Fig. 2: eine vergrösserte Seitenansicht auf ein Kabel mit einer dreischichtigen Ummantelung mit einem abisolierten Kabelende,
- Fig. 3: ein Kabel mit einer zweischichtigen Ummantelung mit mittels Abisoliermessern angeschnittener und zum Bilden eines Spaltes verschobenen ersten Schicht,
- Fig. 4: das Kabel aus Fig. 3 während dem Anschneiden einer zweiten Schicht mittels eines Laserstrahls,
- Fig. 5: das Kabel nach dem Laserschnitt der zweiten Schicht und mit wieder eingefahrenen Abisoliermessern,
- Fig. 6: das fertig abisolierte Kabel und eine mit den Abisoliermessern abgetrennte zweischichtige Ummantelung,
- Fig. 7: ein Kabel mit einer dreischichtigen Ummantelung mit mittels Abisoliermessern angeschnittener und zum Bilden eines Spaltes zum Freilegen einer zweiten Schicht verschobenen ersten Schicht,
- Fig. 8: das Kabel gemäss Fig. 7 während dem Anschneiden einer zweiten Schicht mittels eines Laserstrahls,
- Fig. 9: das Kabel nach dem Laserschnitt der zweiten Schicht und mit wieder eingefahrenen Abisoliermessern,
- Fig. 10: das Kabel nach dem Verschieben der zweiten Schicht zum Bilden eines Spaltes zum Freilegen einer dritten Schicht,
- Fig. 11: das Kabel gemäss Fig. 10 während dem Anschneiden der dritten Schicht mittels eines Laserstrahls,
- Fig. 12: das Kabel nach dem Laserschnitt der dritten Schicht und mit wieder eingefahrenen Abisoliermessern, und
- Fig. 13: das fertig abisolierte Kabel und eine mit den Abisoliermessern abgetrennte dreischichtige Ummantelung.

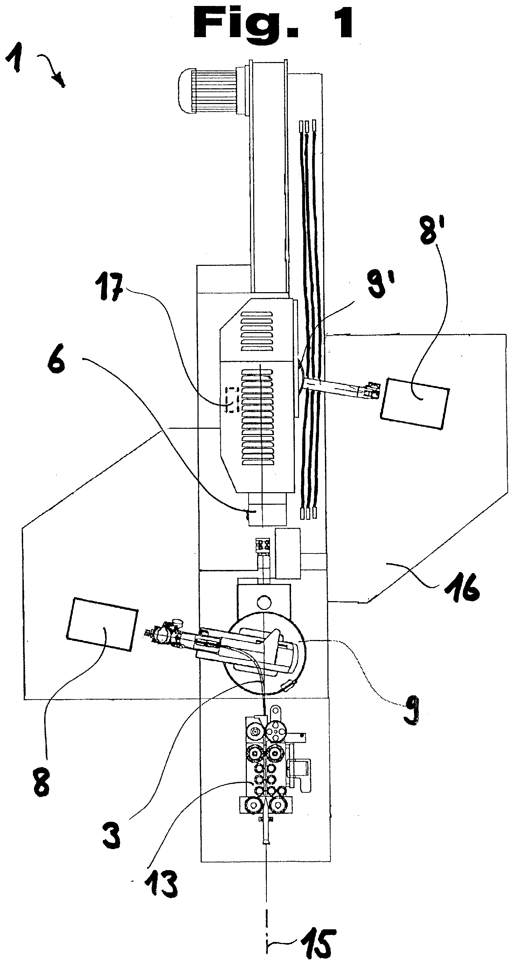

Fig. 1 zeigt eine insgesamt mit 1 bezeichnete Vorrichtung zum Abisolieren von mehrschichtigen Kabeln 3. Die Vorrichtung 1 weist eine als Bandförderer ausgestaltete Zuführeinheit 13 auf, mit welcher das Kabel 3 entlang einer mit 15 bezeichneten Längsrichtung, die im Wesentlichen der Maschinenlängsachse der Vorrichtung 1 entspricht, zu einer Schwenkeinheit 9 bringt. Die Schwenkeinheit 9 verfügt über einen Greifer zum Halten des Kabels 3; mit dem Greifer lässt sich das Kabel in Längsrichtung 15 zur mit 6 bezeichneten Abisoliereinrichtung heranführen.

Bei der Abisoliereinrichtung 6 handelt es sich um eine an sich bekannte Abisolierstation zum Ablängen und Abisolieren von Kabeln mittels (hier nicht dargestellten) Abisoliermessern. Eine derartige Abisolierstation ist beispielsweise in der EP 1 515 410 A2 gezeigt und beschrieben; betreffend Details zur Funktionsweise und konstruktiver Ausgestaltung der Abisoliereinrichtung 6 wird beispielhaft auf dieses Dokument verwiesen. Die Abisoliermesser können als V-Messer ausgestaltet sein, die V-förmige Schneiden aufweisen. Solche V-Messer sind auch aus der EP 1 515 410 A2 bekannt geworden. Die Abisoliermesser können alternativ als V-Messer ausgestaltet sein, wie sie etwa aus der EP 389 107 A1 bekannt geworden sind. Selbstverständlich wären auch Messer mit anderen Schneiden und Schneidgeometrien vorstellbar. Zum Abtrennen von Schichten aus Gewebematerial, insbesondere von glasfaserverstärkten Kunststoffen oder TextilGeweben haben sich Abisoliermesser mit verschränkten Schneiden bewährt, wie sie beispielsweise in der US 6,370,759 offenbart sind. Derartige Abisoliermesser haben den Vorteil, dass die beiden Messer in Kabelrichtung weniger stark auseinandergedrückt werden.

Im Gegensatz zur Abisoliereinrichtung 6, die in der Maschinenlängsachse angeordnet ist, ist eine mit 8 bezeichnete zweite Abisolierstation neben der Maschinenlängsachse angeordnet. Diese Abisolierstation 8 ist als Laser-Schneideinrichtung ausgestaltet. Mittels eines Laserstrahls kann die Ummantelung des Kabels wenigstens teilweise angeschnitten werden. Details zu einer möglichen Ausgestaltung einer solchen Laser-Schneideinrichtung 8 sind beispielsweise aus der US 2015/162729 entnehmbar.

Die Schwenkeinheit 9 ist um eine vertikale Achse drehbar. In der Darstellung gemäss Fig. 1 befindet sich die Schwenkeinheit 9 in ausgeschwenkter Position vor der Laser-Schneideinrichtung 8. Die Schwenkeinheit 9 bildet somit ersichtlicherweise eine Transfereinrichtung, mit der das Kabel 3 von der Abisoliereinrichtung 6 zur Laser-Schneideinrichtung 8 (und selbstverständlich auch zurück) in einer Schwenkbewegung transferiert werden kann. Mit den beiden Abisolierstationen 6 und 8 können die vorauseilenden Kabelenden des Kabels 3 in der nachfolgend im Detail beschriebenen Art und Weise abisoliert werden. Zum Abisolieren des nacheilenden Kabelendes des Kabels 3 sind eine zweite Schwenkeinheit 9' und eine zweite Laser-Schneideinheit 8' vorgesehen, wobei für die nacheilenden Kabelenden die schon erwähnte Abisoliereinrichtung 6 ebenfalls eingesetzt wird.

Die Abisolierstationen 6, 8, 8' sind im Ausführungsbeispiel gemäss Fig. 1 auf einem gemeinsamen Maschinentisch bzw. -Plattform 16 angeordnet. Der Maschinentisch oder die Maschinenplattform 16 kann dabei ein- oder mehrteilig ausgestaltet sein. Die Vorrichtung 1 ist in der Art einer Schwenkmaschine ausgeführt, wie sie beispielsweise an sich schon bei konventionellen Kabelbearbeitungsvorrichtungen zum Konfektionieren von Kabeln bekannt und gebräuchlich sind (vgl. z.B. EP 1 447 888 A1). Die Vorrichtung 1 zum Abisolieren von mehrschichtigen Kabeln 3 könnte beispielsweise auch als lineare Transfermaschine ausgestaltet sein, bei der alle Abisolierstationen (6, 8, 8') auf einer Maschinenlängsachse (15) angeordnet sind. Eine derartige lineare Transfermaschine ist beispielsweise aus der EP 1 073 163 A1 bekannt geworden.

In Fig. 1 weist die Vorrichtung 1 lediglich die erwähnten Abisolierstationen 6 sowie 8 und 8' auf. Es wäre jedoch auch denkbar, weitere Bearbeitungsstationen vorzusehen. Als weiter (hier nicht dargestellte) Bearbeitungsstationen kommen beispielsweise Tüllenstationen, Crimpstationen und Gehäusebestückungsstationen in Frage.

Die Vorrichtung 1 verfügt über eine Steuereinrichtung 17, die mit der Abisoliereinrichtung 6, der Laser-Schneideinrichtung 8 und der Schwenkeinheit 9 als Transfereinrichtung verbunden ist. Die Steuereinrichtung 17 steuert die jeweiligen Schneidvorgänge in der Abisoliereinrichtung 6 und der Laser-Schneideinrichtung 8. Weiterhin steuert die Steuereinrichtung 17 die Transfereinrichtung 9 zum erforderlichen Transfer des Kabels zwischen der Abisoliereinrichtung und der Laser-Schneideinrichtung.

Fig. 2 zeigt ein typisches mehrschichtiges Kabel 3, wie es häufig zum Einsatz kommt. Das einen Leiter 2 umfassende Kabel 3 weist eine mehrschichtige Ummantelung 5 auf, die vorliegend aus drei Schichten zusammengesetzt ist. Die äussere bzw. die von aussen gesehen erste Schicht 10 ist ein Aussenmantel 10. Dieser Aussenmantel 10 kann aus PVC oder einem anderen flexiblen Kunststoffmaterial bestehen und dient zur Isolation und zum Schutz des Kabels vor Witterungseinflüssen. Bei der nachfolgenden zweiten Schicht, also der Schicht, die gegenüber der ersten Schicht 10 innen liegt, handelt es sich um eine Gewebeschicht 11 oder eine andere Verstärkungsschicht, die beispielsweise ein Glasfasergewebe sein kann. Die dritte Schicht der Ummantelung wird schliesslich durch eine dünne Folie 12 gebildet, die aus einem Kunststoffmaterial bestehen kann. Die Folie 12 kann auch als Schirmfolie ausgestaltet sein. Der Leiter 2 besteht vorliegend aus mehreren Litzen, die üblicherweise aus Kupfer oder Aluminium gefertigt sind.

In den Figuren 3 bis 6 sind einzelne Verfahrensschritte eines erfindungsgemässen Verfahrens zum Abisolieren eines Kabels 3 mit einer zweischichtigen Ummantelung 5 dargestellt. Die Ummantelung 5 des Kabel 3 entspricht grundsätzlich dem Mantelaufbau des Kabels aus Fig. 2, im Gegensatz zum in Fig. 2 dargestellten Kabel fehlt bei diesem Kabel 3 allerdings die Folie (12).

Das entsprechende Abisolationsverfahren zum Abisolieren des Kabels 3 mit der zweischichtigen Ummantelung 5 ist wie folgt: Zunächst wird das Kabel 3 mittels zweier aufeinander zu bewegbaren Abisoliermessern 4 und 14 einer Abisoliereinrichtung angeschnitten. Die jeweiligen Schnitttiefen sind dabei derart eingestellt, dass sie der Dicke des Aussenmantels 10 entsprechen. Das Anschneiden erfolgt somit bis zum Erreichen der zweiten Schicht, die durch die Gewebeschicht 11 gebildet ist. Die Bewegungsrichtungen für den Schneidevorgang sind jeweils mit Pfeilen e₁ angedeutet. Nach dem Anschneiden werden die Abisoliermesser 4, 14 in Bezug auf das Kabel 3 in Längsrichtung 15 verschoben. Die Verschiebebewegung ist mit Pfeilen f₁ angedeutet. Das Verschieben kann dabei durch bewegende Abisoliermesser 4, 14 und/oder durch Bewegen des Kabels 3 (beispielsweise mittels des in Fig. 1 erwähnten Greifers der Schwenkeinheit 9) erfolgen. Das so vom Aussenmantel 10 teilweise abgezogene Mantelteil ist mit 10' bezeichnet.

Durch dieses Verschieben entsteht ein Spalt, wodurch die zweite Schicht 11 um eine Spaltbreite s freigelegt ist. Die Schaffung des Spaltes mit der Spaltbreite s ermöglicht ein Applizieren eines Laserstrahls zum Anschneiden der zweiten Schicht 11. Die Spaltbreite s ist abhängig vom zu verarbeiteneden Kabel und von dessen Dimensionen und beträgt typischerweise 0.1 mm bis 1 mm.

Nach dem Anschneiden des Aussenmantels 10 und dem begrenzten Verschieben dieser angeschnittenen Schicht bzw. des Mantelteils 10' in der Abisoliereinrichtung kann das Kabel 3 mittels einer (hier nicht dargestellten) Transfereinrichtung zu einer Laser-Schneideinrichtung 8 gebracht werden. Die in Zusammenhang mit Fig. 1 erwähnte Steuereinrichtung (17) ist bevorzugt dazu ausgebildet, das Kabel 3 von der Abisoliereinrichtung 6 nach Beendigung des Anschneidervorgangs automatisch zur Laser-Schneideinrichtung 8 zuzuführen.

Der Laserschneid-Vorgang ist in Fig. 4 illustrativ gezeigt. Mit der Laser-Schneideinrichtung 8 wird ein Laserstrahl 7 in radialer Richtung gegen das Kabel 3 gerichtet. Durch Rotieren des Kabels oder durch ein Rotieren der Strahlenquelle zum Erzeugen des Laserstrahls 7 um das Kabel 3 herum wird ein umlaufender Schnitt erzeugt, mit dem die Gewebeschicht 11 vollständig durchtrennt wird.

Nach dem Anschneiden der zweiten Schicht 11 durch den Laserstrahl kommen wieder die Abisoliermesser 4, 14 zum Einsatz. Die Abisoliermesser 4, 14 werden in den Spalt zwischen den um die Breite s voneinander entfernten Aussenmäntel 10, 10' positioniert. Fig. 5 zeigt die Abisoliereinrichtung 6 mit derart positionierten Abisoliermessern 4, 14. Durch Verschieben der Abisoliermesser 4, 14 in f₂-Richtung kann nun die vollständig angeschnittene Ummantelung 10' vom Leiter 2 abgezogen werden. In Fig. 6 ist das fertig abisolierte Ende des Kabels 3 gezeigt. Durch Verschieben der Abisoliermesser 4, 14 wurde das mit 5' bezeichnete abgetrennte Hülsenteil der Ummantelung vom Kabel 3 entfernt. Das Hülsenteil 5' besteht dabei aus dem abgetrennten Mantelteil 10' und dem abgetrennten Teil 11' der zweiten Schicht.

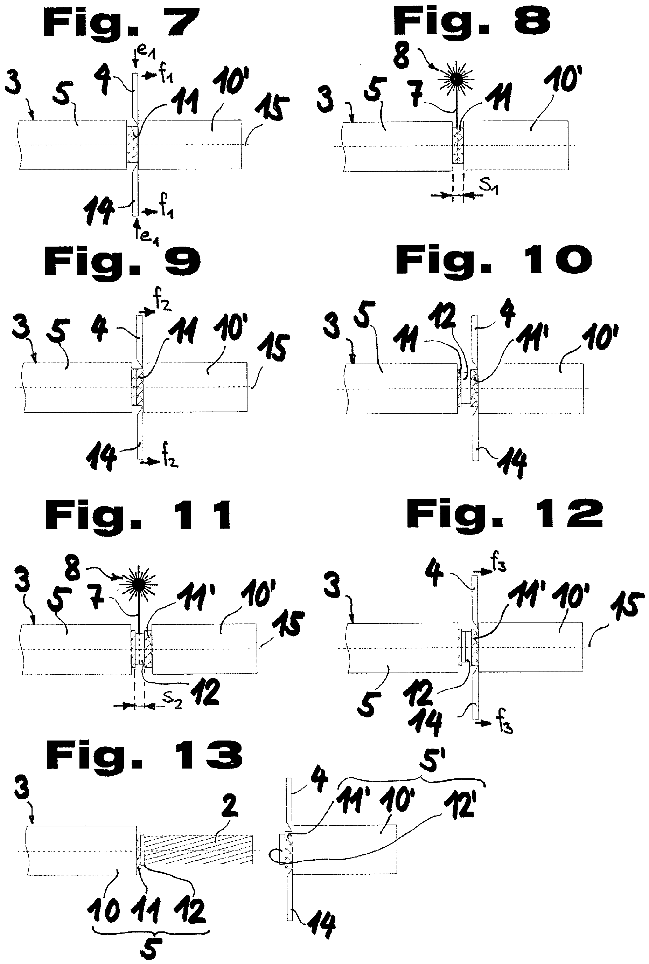

Die Figuren 7 bis 13 zeigen ein Verfahren zum Abisolieren eines Kabels 3 mit einer dreischichtigen Ummantelung 5, welches wie das in Fig. 2 gezeigte Kabel aufgebaut ist. Die Figuren 7 bis 9 entsprechen dabei im Wesentlichen den Figuren 3 bis 5. Das Kabel 3 wird zunächst mittels Abisoliermessern 4, 14 angeschnitten und dann um eine Spaltbreite s₁ teilweise abgezogen (Fig. 7), danach wird die zweite Schicht 11 durch den Laserstrahl 7 angeschnitten (Fig. 8) und dann werden die Abisoliermesser 4, 14 wieder in den Spalt positioniert (Fig. 9).

Nun werden die Abisoliermesser 4, 14 - im Gegensatz zum Abisolierprozess gemäss den Figuren 3 bis 6 - nur um ein kleines Stück in Richtung der Längsrichtung 15 bewegt (Pfeile f₂). Auf diese Weise wird ein Spalt geschaffen, um den die dritte Schicht 12 freigelegt ist. Fig. 10 zeigt das Kabel 3 nach dieser Verschiebebewegung. Die Spaltbreite, um die die dritte Schicht 12 freigelegt ist, ist in Fig. 11 mit s₂ bezeichnet.

Nun kann wieder die Laser-Schneideinrichtung eingesetzt werden. Der Laserstrahl 7 wird in einer Rotationsbewegung um das Kabel 3 bewegt und die Folie 12 so vollständig durchtrennt (Fig. 11). Nach dem Anschneiden der dritten Schicht 12 durch den Laserstrahl werden die Abisoliermesser 4, 14 derart positioniert, dass sie die durch die Abisoliermesser geschaffene Schulter des abgetrennten Mantelteils 10' des Aussenmantels seitlich erfassen (Fig. 12). Durch Verschieben der Abisoliermesser 4, 14 in f₃-Richtung kann nun die Ummantelung vollständig abgezogen werden (Fig. 13). Das Hülsenteil 5' besteht ersichtlicherweise aus drei Schichten, nämlich aus dem Mantelteil 10', dem Teil 11' der zweiten Schicht sowie einem abgetrennten Folienteil, das mit 12' bezeichnet ist.

## Patentansprüche

1. Verfahren zum Abisolieren eines Kabels (3) mit einer mehrschichtigen Ummantelung (5), umfassend die folgende Schritte:
a) Anschneiden einer ersten Schicht (10) der Ummantelung (5) des Kabels (3) in einer Abisoliereinrichtung (6) mit wenigstens einem Abisoliermesser (4, 4'),
b) Anschneiden einer gegenüber der ersten Schicht innen liegenden Schicht (11) der Ummantelung (5) durch einen Laserstrahl einer Laser-Schneideinrichtung (8), und
c) Abziehen der mittels Abisoliermesser (4, 4') und Laserstrahl (7) angeschnittenen Ummantelung (5),
wobei nach dem Schritt a) die angeschnittene erste Schicht (10) derart verschoben wird, dass zum Freilegen der durch den Laserstrahl anzuschneidenden Schicht (11) ein Spalt entsteht

2. Verfahren nach Anspruch 1, **dadurch gekennzeichnet, dass** vor dem Abziehen der Ummantelung (5) gemäss Schritt c) wenigsten einer der Schritte a) und b) wiederholt wird.

3. Verfahren nach Anspruch 1 oder 2, **dadurch gekennzeichnet, dass** zwischen den Schritten a) und b) das Kabel (3) mittels einer Transfereinrichtung (9) von der Abisoliereinrichtung (6) zur Laser-Schneideinrichtung (8) transferiert wird.

4. Verfahren nach einem der Ansprüche 1 bis 3, **dadurch gekennzeichnet, dass** nach Beendigung des Schrittes b) das Kabel (3) mittels der Transfereinrichtung (9) zurück zur Abisoliereinrichtung (6) gebracht wird und dass durch Verschieben des wenigstens einen Abisoliermessers (4, 4') der Abisoliereinrichtung (6) die angeschnittene Ummantelung (5) teilweise oder vollständig abgezogen wird.

5. Verfahren nach Anspruch 4, **dadurch gekennzeichnet, dass** durch das teilweise Abziehen der angeschnittenen Ummantelung (5) ein Spalt entsteht, in den der Laserstrahl der Laser-Schneideinrichtung (8) für ein Anschneiden einer weiteren Schicht (12) eingebracht wird.

6. Vorrichtung (1) zum Abisolieren eines Kabels (3) mit einer mehrschichtigen Ummantelung (5) zum Durchfuhren des Verfahrens nach einem der Ansprüche 1 bis 8 mit einer Abisoliereinrichtung (6) mit wenigstens einem Abisoliermesser (4, 4'), wobei die Vorrichtung (1) eine Laser-Schneideinrichtung (8) aufweist, wobei einzelne oder mehrere der Schichten (10, 11, 12) der Ummantelung (5) wahlweise in der Abisoliereinrichtung (6) oder in der Laser-Schneideinrichtung (8) anschneidbar sind, **dadurch gekennzeichnet, dass** die Vorrichtung (1) eine Steuereinrichtung (17) aufweist, die derart ausgestaltet ist und die derart mit der Abisoliereinrichtung (6) und der Laser-Schneideinrichtung (8) verbunden ist, dass mit der Steuereinrichtung (17) sowohl der Schneidvorgang zum Anschneiden wenigstens einer Schicht (10, 12) der Ummantelung (5) des Kabels (3) unter Verwendung der Abisoliereinrichtung (6), das Verschieben der durch die Abisoliereinrichtung (6) angeschnittenen Schicht (10, 12) zum Bilden eines Spaltes zum Freilegen der durch den Laserstrahl anzuschneidenden Schicht (11) mittels des wenigstens einen Abisoliermessers der Abisoliereinrichtung (6), als auch der Schneidvorgang zum Anschneiden wenigstens einer anderen oder weiteren Schicht (11) der Ummantelung (5) des Kabels (3) unter Verwendung der Laser-Schneideinrichtung (8) ansteuerbar ist.

7. Vorrichtung (1) nach Anspruch 6, **dadurch gekennzeichnet, dass** die Vorrichtung (1) eine Transfereinrichtung (9) zum Transfer des Kabels (3) zwischen der Abisoliereinrichtung (6) und der Laser-Schneideinrichtung (8) aufweist.

8. Vorrichtung (1) nach Anspruch 7, **dadurch gekennzeichnet, dass** die Steuereinrichtung (17) mit der Transfereinrichtung (9) verbunden ist und die Steuereinrichtung (17) dazu ausgebildet ist, das Kabel (3) nach Beendigung eines Anschneidervorgangs in der Abisoliereinrichtung (6) oder in der Laser-Schneideinrichtung (8) automatisch von der Abisoliereinrichtung (6) zur Laser-Schneideinrichtung (8) oder von der Laser-Schneideinrichtung (8) zur Abisoliereinrichtung (6) zuzuführen.

## Claims

1. A method for stripping a cable (3) having a multi-layered sheath (5), comprising the following steps:
a) cutting a first layer (10) of the sheath (5) of the cable (3) in a stripping device (6) using at least one stripping blade (4, 4'),
b) cutting an inner layer (11) of the sheath (5) located opposite the first layer by means of a laser beam of a laser cutting device (8), and
c) removal of the sheath (5) cut by means of the stripping blade (4, 4') and laser beam (7),
wherein, after step a), the cut first layer (10) is displaced in such a manner that a split forms to expose the layer (11) to be cut using the laser beam.

2. The method according to claim 1, **characterized in that** at least one of steps a) and b) is repeated before the removal of the sheath (5) in accordance with step c).

3. The method according to claim 1 or 2, **characterized in that** between steps a) and b), the cable (3) is transferred from the stripping device (6) to the laser cutting device (8) by means of a transfer device (9).

4. The method according to any of claims 1 to 3, **characterized in that** after the end of step b), the cable (3) is returned to the stripping device (6) by means of the transfer device (9) and **in that** by means of a displacement of the at least one stripping blade (4, 4') of the stripping device (6), the cut sheath (5) is partly or fully removed.

5. The method according to claim 4, **characterized in that** a split is formed by the partial removal of the cut sheath (5), into which split the laser beam of the laser cutting device (8) is introduced in order to cut an additional layer (12).

6. A device (1) for stripping a cable (3) having a multi-layered sheath (5) for carrying out the method according to any of claims 1 to 8, having a stripping device (6) with at least one stripping blade (4, 4'), the device (1) having a laser cutting device (8), and it being possible for one or more layers (10, 11, 12) of the sheath (5) to be selectively cut in the stripping device (6) or in the laser cutting device (8), **characterized in that** the device (1) has a control device (17), which is designed and which is connected to the stripping device (6) and the laser cutting device (8) in such a manner that, using the control device (17), the cutting process for cutting at least one layer (10, 12) of the sheath (5) of the cable (3) by means of the stripping device (6), the displacement of the layer (10, 12) cut by the stripping device (6) in order to form a split to expose the layer (11) to be cut using the laser beam by means of the at least one stripping blade of the stripping device (6), and the cutting process for cutting at least one different or additional layer (11) of the sheath (5) of the cable (3) is controllable via the laser cutting device (8).

7. The device (1) according to claim 6, **characterized in that** the device (1) has a transfer device (9) to transfer the cable (3) between the stripping device (6) and the laser cutting device (8).

8. The device (1) according to claim 7, **characterized in that** the control device (17) is connected to the transfer device (9) and the control device (17) is designed to automatically feed the cable (3) from the stripping device (6) to the laser cutting device (8) or from the laser cutting device (8) to the stripping device (6) after the end of a cutting procedure in the stripping device (6) or in the laser cutting device (8).

## Revendications

1. Procédé pour dénuder un câble (3) comprenant une gaine multicouche (5), le procédé comprenant les étapes suivantes :
a) découpe d'une première couche (10) de la gaine (5) du câble (3) dans un dispositif de dénudage (6) comportant au moins un couteau à dénuder (4, 4'),
b) découpe d'une couche (11) interne de la gaine (5), laquelle couche est opposée à la première couche, par un faisceau laser provenant d'un dispositif de découpe laser (8), et
c) retrait de la gaine (5) découpée au moyen d'un couteau à dénuder (4, 4') et d'un faisceau laser (7),
la première couche (10) découpée étant déplacée après l'étape a), de sorte qu'il se crée un espace pour exposer la couche (11) découpée par le faisceau laser.

2. Procédé selon la revendication 1, **caractérisé en ce qu'**au moins une des étapes a) et b) est répétée avant le retrait de la gaine (5) selon l'étape c).

3. Procédé selon la revendication 1 ou 2, **caractérisé en ce qu'**entre les étapes a) et b), le câble (3) est transféré du dispositif de dénudage (6) au dispositif de découpe laser (8) au moyen d'un dispositif de transfert (9).

4. Procédé selon l'une des revendications 1 à 3, **caractérisé en ce qu'**après l'achèvement de l'étape b) le câble (3) est ramené au dispositif de dénudage (6) au moyen du dispositif de transfert (9), et **en ce que** la gaine découpée (5) est partiellement ou totalement retirée du dispositif de dénudage (6) par déplacement de l'au moins un couteau de dénudage (4, 4').

5. Procédé selon la revendication 4, **caractérisé en ce que** le retrait partiel de la gaine (5) découpée crée un espace dans lequel le faisceau laser du dispositif de découpe laser (8) est introduit pour découper une autre couche (12).

6. Dispositif (1) pour dénuder un câble (3) comprenant une gaine multicouche (5), lequel dispositif permet de mettre en œuvre le procédé selon l'une des revendications 1 à 8 à l'aide d'un dispositif de dénudage (6) comportant au moins un couteau à dénuder (4, 4'), le dispositif (1) comportant un dispositif de découpe laser (8), une ou plusieurs des couches (10, 11, 12) de la gaine (5) pouvant être découpées soit dans le dispositif de dénudage (6) soit dans le dispositif de découpe laser (8), **caractérisé en ce que** le dispositif (1) comporte un dispositif de commande (17) qui est conçu et relié au dispositif de dénudage (6) et au dispositif de découpe laser (8) de telle manière que le dispositif de commande (17) puisse être utilisé pour commander aussi bien le processus de découpe pour la découpe d'au moins une couche (10, 12) de la gaine (5) du câble (3) en utilisant le dispositif de dénudage (6), le déplacement de la couche (10, 12) découpée par le dispositif de dénudage (6) pour former un espace de façon à exposer la couche (11) à découper par le faisceau laser au moyen de l'au moins un couteau à dénuder du dispositif de dénudage (6), que le processus de découpe pour découper au moins une couche (11) différente ou supplémentaire de la gaine (5) du câble (3) en utilisant le dispositif de découpe laser (8).

7. Dispositif (1) selon la revendication 6, **caractérisé en ce que** le dispositif (1) comporte un dispositif de transfert (9) pour transférer le câble (3) entre le dispositif de dénudage (6) et le dispositif de découpe laser (8).

8. Dispositif (1) selon la revendication 7, **caractérisé en ce que** le dispositif de commande (17) est relié au dispositif de transfert (9), et le dispositif de commande (17) est conçu pour amener le câble (3), après l'achèvement d'un processus de découpe, dans le dispositif de dénudage (6) ou dans le dispositif de découpe laser (8) automatiquement depuis le dispositif de dénudage (6) vers le dispositif de découpe laser (8) ou depuis le dispositif de découpe laser (8) vers le dispositif de dénudage (6).
